# EUROPÄISCHE PATENTANMELDUNG

(11) **EP 2 221 935 A2**
(43) Veröffentlichungstag der Anmeldung: **25.08.2010**
(21) Anmeldenummer: 09169470.3
(22) Anmeldetag: 04.09.2009
(51) Int. Cl.: H02J 3/14, G05B 19/042

(54) **Steuereinheit mit einem parametrierbaren Steuerstromkreis zur Ansteuerung zumindest eines Hauptstromkreisgerätes eines Verbraucherabzweiges**

(30) Priorität: 26.09.2008 DE 102008049456
(71) Anmelder: Siemens Aktiengesellschaft, 80333 München (DE)
(72) Erfinder: Haas, Volker, 06804, Muldenstein (DE); Obenaus, Sven, 06279, Farnstädt (DE)

(57) **Zusammenfassung**

Steuereinheit (40)
- mit einem parametrierbaren Steuerstromkreis (50) zur Ansteuerung von Hauptstromkreisgeräten (44, 45, 46) eines Verbraucherabzweiges (5; 6; 7; 8; 9) mittels Steuerstellen (15, 54, 57), wobei der Steuerstromkreis (50) eingestellt auf verschiedene Werte (p1' oder p1" bis p12' oder p12") von Parametern (P1 bis P12) eines Parametersatzes (PS) verschiedene Steuerfunktionen für den Verbraucherabzweig (5; 6; 7; 8; 9) realisiert, und
- mit Mitteln zum Einstellen der verschiedenen Werte der Parameter des Parametersatzes,
- wobei der Steuerstromkreis (50) auf zumindest einer Steuerplatine (49) ausgebildet ist.

Um die Steuereinheit optimal an die Anforderungen des Verbraucherabzweiges - insbesondere eines Motorabzweiges - in Niederspannungs-Schaltanlagen anzupassen ist vorgesehen, dass als Mittel zum Einstellen der verschiedenen Werte der Parameter zumindest eine direkt auf der Steuerplatine (49) angeordnete Parametriereinrichtung, insbesondere in Form eines DIP-Schalters (61) vorgesehen ist.

## Beschreibung

Die Erfindung betrifft die konstruktive Gestaltung einer Steuereinheit
- mit einem parametrierbaren Steuerstromkreis zur Ansteuerung von Hauptstromkreisgeräten eines Verbraucherabzweiges mittels Steuerstellen, wobei der Steuerstromkreis eingestellt auf verschiedene Werte von Parametern eines Parametersatzes verschiedene Steuerfunktionen für den Verbraucherabzweig, und
- mit Mitteln zum Einstellen der verschiedenen Werte der Parameter des Parametersatzes,
- wobei der Steuerstromkreis auf zumindest einer Steuerplatine ausgebildet ist.

Für den elektrischen Betrieb von Verbrauchern - also Geräten (Maschinen) oder Einrichtungen (Anlagen), die elektrische Energie in eine andere, nicht elektrische Energieform umwandeln (z.B. Motore), werden Verbraucherabzweige (z.B. Motorabzweige) in Niederspannungs-Schaltanlagen eingesetzt. Die Schaltung eines Verbraucherabzweiges wird in Hauptstromkreis und Steuerstromkreis unterteilt.

Der Hauptstromkreis umfasst gewöhnlich die Schalt- und Schutzgeräte wie Leistungsschalter, Sicherungen, Schütze und Überlastrelais und die zugehörigen Strombahnen.

Zum Steuerstromkreis eines Verbraucherabzweiges zählen alle Geräte und Verdrahtungen zur Ansteuerung seiner Hauptstromkreisgeräte. Das beinhaltet u. a. die Anbindung von Steuerstellen - also die Anbindung von Eingabe- und Anzeigegeräten für den Bediener - zur Steuerung direkt am Verbraucherabzweig, zur Fernsteuerung aus einer Leitwarte (oft auch als Automatik Steuerung bezeichnet) oder zur Vor-Ort-Steuerung direkt am Verbraucher (z.B. am Motor). Zum Steuerstromkreis zählt auch eine für den Verbraucherabzweig spezifische Logik und Verriegelung seiner Hauptstromkreisgeräte - bei einem Motorabzweig also insbesondere die spezifische Logik und Verriegelung der Hauptstromkreisgeräte, die zum Schalten des jeweiligen Motors dienen, wobei dies häufig ein oder mehrere Schütze sind.

Aus der Druckschrift "Die variable Schaltanlage SIVACON", 2003, Bestell-Nr. E20001-A180-P309 ist bekannt, das ein derartiger Steuerstromkreis durch die Kombination und Verdrahtung von verschiedenen Hilfsschützen, Relais und Hilfsschaltgliedern am Hauptstromkreisgerät realisiert werden kann. Für die Bedienung und Anzeige werden dabei Schalter, Taster und Leuchtmelder eingesetzt.

Alternativ zeigt diese Druckschrift eine gattungsgemäße Steuereinheit in Form des Motorschutz- und Steuergerätes SIMOCODE-DP, die in einem Einschubmodul ausgebildeten Motorabzweig angeordnet ist. Durch das dort gezeigte Motorschutz- und Steuergerät SIMOCODE-DP ist der Steuerstromkreis zur Ansteuerung der Hauptstromkreisgeräte dieses Motorabzweiges realisiert. Dabei ist ein Grundgerät des Motorschutz- und Steuergerätes SIMOCODE-DP über ein Flachbandkabel mit einer Steuerstelle in Form eines Bedienbausteines verbunden, wobei der Bedienbaustein eine Folientastatur und eine elektronische Schaltung zur Ansteuerung der Folientastatur aufweist. Dieses durch Parametrierung an die gewünschte Funktionalität des Motorabzweiges angepasste Motorschutz- und Steuergerät SIMOCODE-DP übernimmt damit die Steuerung und Überwachung der Hauptstromkreisgeräte des Motorabzweiges und die Kommunikation mit Steuerstellen. Es wird jedoch in der Regel bei High-End-Anwendungen mit Anbindung an einen PROFIBUS-DP eingesetzt, so wie dies beispielsweise auch im Handbuch "System SIMOCODE-DP 3UF5 Motorschutz- und Steuergerät, 1998, Bestell-Nr. 3UF57 00-0AA00-0 gezeigt ist. Aus der Praxis ist bekannt, dass der Steuerstromkreis beim Motorschutz- und Steuergerät SIMOCODE-DP auf zumindest einer Steuerplatine ausgebildet ist, wobei die Parametrierung mittels eines direkt an das Grundgerät oder an den Bedienbaustein angeschlossenen Programmiergerätes (PC) erfolgt.

Ausgehend von einer Steuereinheit mit den Merkmalen des Oberbegriffes des Patentanspruches 1 ist Aufgabe der Erfindung diese optimal an die Anforderungen eines Verbraucherabzweiges - insbesondere eines Motorabzweiges - in Niederspannungs-Schaltanlagen anzupassen.

Diese Aufgabe wird dadurch gelöst, das als Mittel zum Einstellen der verschiedenen Werte jedes der Parameter zumindest ein DIP-Schalter vorgesehen ist, wobei der zumindest eine DIP-Schalter direkt auf der Steuerplatine angeordnet ist. Diese Ausgestaltung hat den Vorteil, dass zur Parametrierung der Steuereinheit kein mit entsprechender Software ausgestattetes Programmiergerät mehr erforderlich ist.

Weitere vorteilhafte Ausgestaltungen der erfindungsgemäßen Steuereinheit sind in den Unteransprüchen 2 bis 8 angegeben.

Die Ansprüche 9 und 10 betreffen einen Verbraucherabzweig, insbesondere einen Motorabzweig einer Niederspannungs-Schaltanlage mit einer erfindungsgemäßen Steuereinheit und der Anspruch 10 betrifft eine Stromverteilereinheit, insbesondere eine Niederspannungs-Schaltanlage, mit einem derartigen Verbraucherabzweig.

Insbesondere ist gemäß einer vorteilhaften Ausgestaltung der Erfindung der Steuerstromkreis der Steuereinheit als eine Relais-Schaltung oder eine Logikbaustein-Schaltung oder eine Mikroprozessor-Schaltung oder aber als eine Kombination aus zumindest zwei der genannten Schaltungen, insbesondere als eine Kombination aus einer Relais-Schaltung und einer Logikbaustein-Schaltung ausgebildet.

Weitere vorteilhafte Ausgestaltungen sehen vor, dass zumindest ein erster der Parameter eine Schaltungsart zumindest einer der Hauptstromkreisgeräte, zumindest ein zweiter der Parameter eine Betriebsart zumindest einer Steuerstelle und zumindest ein dritter der Parameter die Betriebsart einer Fehlermeldestelle ist.

Eine montagetechnisch sehr einfache Anbindung von zumindest drei Steuerstellen ist dadurch realisiert, dass für jede dieser drei Steuerstellen jeweils ein Anschluss direkt auf der Steuerplatine ausgebildet ist.

Dabei sind mit Vorteil ein erster und ein zweiter der Anschlüsse jeweils als Klemmenblock und ein dritter der Anschlüsse als ein Flachbandkabel-Anschluss ausgebildet, wobei der Flachbandkabel-Anschluss über ein Flachbandkabel mit einer der Steuerstellen, die als Folientastatur ausgebildet ist, verbunden ist.

Zum Schutz der Steuerplatine ist vorgesehen, dass sie in einem aus Blech gebogenen Gehäuse befestigt und vergossen ist, wobei das Gehäuse Befestigungsmittel zum Befestigen in einem Verbraucherabzweig, insbesondere in einem Motorabzweig, einer Niederspannungs-Schaltanlage aufweist.

Die neue Steuereinheit ist sehr universell in den bekannten, in ihrer Ausführungsform und Größe sehr unterschiedlichen Verbraucherabzweigen einsetzbar. Es können insbesondere sowohl Einschubmodule als auch Steckeinsatzmodule oder Festeinbaumodule mit der neuen Steuereinheit bestückt werden, um die Funktionalität des Steuerstromkreises für zumindest eines der Hauptstromkreisgeräte derartiger Module auf einfache und preiswerte Weise sicher zu stellen.

Eine Ausführungsform der Erfindung ist in den Figuren 1 bis 9 dargestellt.

Dabei zeigen:
Figur 1 eine Stromverteilereinheit mit einer Vielzahl von Verbraucherabzweigen in Form von Einschubmodulen,
Figur 2 einen Ausschnitt der Stromverteilereinheit gemäß der Figur 1 mit einer an einem Fachboden gehaltenen Verteilungsbaugruppe, die ein Feldschienensystem der Stromverteilereinheit kontaktiert,
Figur 3 die Verteilungsbaugruppe gemäß der Figur 2 geöffnet, mit Kontakten zur Kontaktierung des Feldschienen-Systems und mit Einspeise-/Abgangs- und Steuerverdrahtung für die Einschubmodule und mit Steckeraufnahmen für Einspeise-/Abgangs- und Steuerstecker,
Figur 4 eines der Einschubmodule, das einen Verbraucherabzweig in Form eines Motorabzweiges bildet, mit verschiebbaren Kontakteinheiten in Form von Einspeise-/Abgangs- und Steuersteckern.
Figur 5 den Motorabzweig gemäß der Figur 4 mit einer erfindungsgemäßen Steuereinheit in Draufsicht,
Figur 6 einen vergrößerten Ausschnitt aus Figur 5,
Figuren 7 und 8 die erfindungsgemäße Steuereinheit in zwei verschiedenen Ansichten mit einem Gehäuse und
Figur 9 eine schematische Darstellung des Motorabzweiges gemäß der Figur 5 mit Verbindungskabeln.

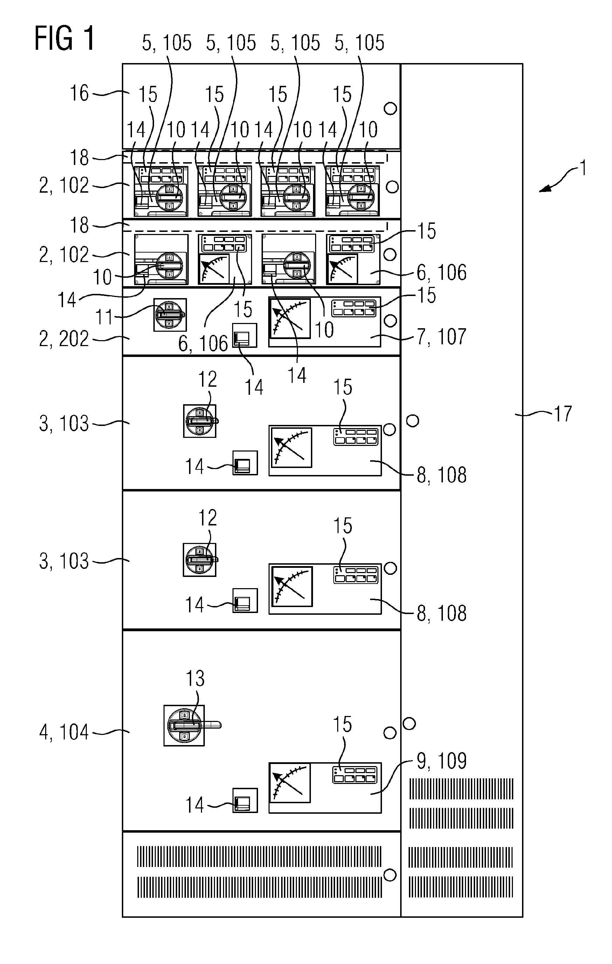

Die Figur 1 zeigt beispielhaft eine Stromverteilereinheit 1 in Form eines Schaltfeldes einer Niederspannungs-Schaltanlage mit insgesamt sechs Einschubfächern 2, 3, 4 (Einschubzeilen) und einer Vielzahl von in den Einschubfächern aufgenommenen Verbraucherabzweigen 5, 6, 7, 8, 9, von denen einige 5, 6, 7 Motorabzweige bilden. Da die gezeigte Niederspannungs-Schaltanlage überwiegend Motoren zu versorgen und zu steuern hat, wird sie in der Praxis häufig auch als Motor-Control-Center (MCC) bezeichnet.

Die Einschubfächer 2, 3, 4 sind jeweils durch eine frontseitige Schaltfeld-Tür 102, 103, 104 verschließbar. Die Verbraucherabzweige - hier in Form von Einschubmodulen - erstrecken sich entweder im Wesentlichen über die gesamte Breite des jeweiligen Einschubfaches (Verbraucherabzweige 7, 8 und 9 in Form von Einschubmodulen der Größen 1, 2 und 3, die jeweils auch als Volleinschub bezeichnet werden) oder im Wesentlichen über die Hälfte oder auch nur ein Viertel der Gesamtbreite des jeweiligen Einschubfaches (Einschubmodule 6 der Größen 1/2 und Einschubmodule 5 der Größe 1/4, die jeweils auch als Kleineinschub bezeichnet werden).

Die Einschubmodule weisen jeweils eine Frontplatte 105, 106, 107, 108 bzw. 109 auf.

Mit den Bezugszeichen 10, 11, 12 bzw. 13 ist jeweils eine Handhabe bzw. ein Drehgriff zu Drehbetätigung eines im Inneren der Einschubmodule angeordneten Hauptschalters bezeichnet. Mit dem Bezugszeichen 14 ist jeweils ein Handschieber bezeichnet, der in einer Geöffnetstellung eine Zugangsöffnung für ein Betätigungswerkzeug freigibt. Das Betätigungswerkzeug dient dabei zum Einstellen zweier oder mehrerer Schaltstellungen des Hauptschalters, indem es auf zwei in der Einschubeinheit angeordnete Verfahrmechaniken einwirkt. Insbesondere umfassen die Schaltstellungen eine Test-, Betriebs- oder Trennstellung des Hauptschalters. Die genaue Funktionsweise dieser Verfahrmechaniken ist in der deutschen Patentanmeldung DE 10 2007 032 548.9 beschrieben, so dass an dieser Stelle nicht weiter darauf eingegangen wird.

Mit dem Bezugszeichen 15 ist jeweils ein Bedien- und Anzeigefeld - im Weiteren auch als FERN-HAND-Steuerstelle bezeichnet - versehen.

In der Stromverteilereinheit 1 sind beispielhaft, in der vorliegenden Darstellung jedoch nicht sichtbare einspeisende Hauptsammelschienen im oberen Bereich 16 der Stromverteilereinheit und mit den Hauptsammelschienen verbundene Feldschienen im linken hinteren Bereich der Stromverteilereinheit angeordnet. Rechts von den Einschubfächern befindet sich ein mit einer separaten frontseitigen Tür 17 versehener Raum zur Aufnahme von Kabeln und Leitungen (Kabelanschlussraum), die zu Verbrauchern führen.

Den in einem gemeinsamen Einschubfach 2 nebeneinander untergebrachten Verbraucherabzweigen 5 bzw. 6 in Form von Kleineinschüben der Größe 1/4 bzw. 1/2 ist jeweils eine gemeinsame Verteilungsbaugruppe 18 (Adapterplatte) zugeordnet, um die Verbraucherabzweige 5, 6 mit den Feldschienen zu verbinden.

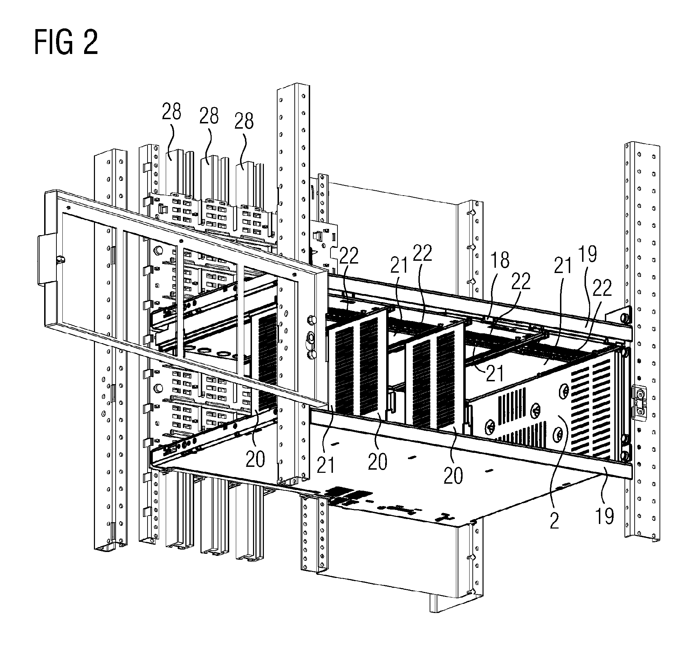

Gemäß der Figur 2 ist die Verteilungsbaugruppe 18 fest an einem die Oberseite des zugeordneten Einschubfaches 2 bildenden Fachbodens 19 fixiert. Dabei ist das gezeigte Einschubfach 2 - abgestimmt auf die Anzahl der darin nebeneinander untergebrachten Kleineinschübe - durch mehrere Fach-Trennwände 20 in Teilfächer 21 unterteilt, wobei nicht alle der Fach-Trennwände 20 gezeigt sind.

An der Unterseite der Verteilungsbaugruppe 18 sind vier Schutzplatten 22, die auch als Shutterplatten oder Shutter bezeichnet werden, verliersicher gehalten, die bei Aufhebung einer Verriegelung an der Verteilungsbaugruppe 18 verschiebbar geführt sind, so wie dies in der deutschen Patentanmeldung DE 10 2008 020 753.5 beschrieben ist. Dabei dient jeweils eine der Schutzplatten 22 zum Verschließen jeweils einer Durchtrittsöffnung der Verteilungsbaugruppe.

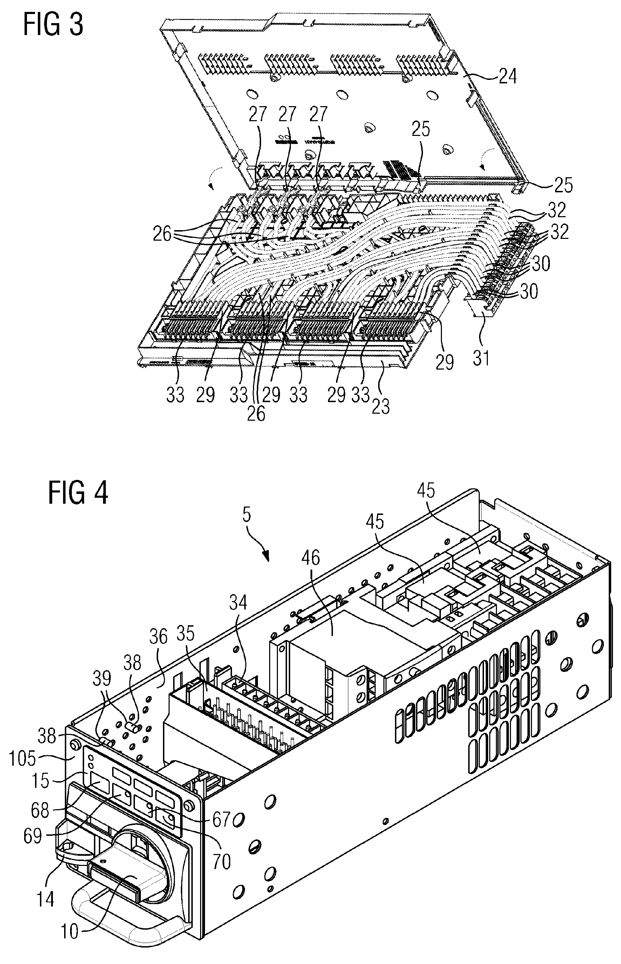

Gemäß der Figur 3 weist die Verteilungsbaugruppe 18 eine verhältnismäßig flache quaderförmige Grundform auf und besteht aus einem Bodenteil 23 und einem Deckel 24, die beide aus elektrisch isolierendem Kunststoff hergestellt und durch angeformte Haltezungen 25 verbindbar sind. Die Verteilungsbaugruppe 18 (Adapterplatte) besitzt erste biegsame isolierte elektrische Leiter 26, die eine Einspeiseverdrahtung bilden und die jeweils an ihrem einen Ende einen Haupttrennkontakt 27 aufweisen, der eine der in der Figur 2 gezeigten Feldschienen 28 kontaktiert, und die an ihrem anderen Ende in eine Haupttrennkontakt-Steckeraufnahme 29 eingesetzt sind. Weiterhin besitzt die Verteilungsbaugruppe 18 (Adapterplatte) zweite biegsame isolierte elektrische Leiter 30 , die eine Abgangsverdrahtung bilden und die an ihrem einen Ende in die Haupttrennkontakt-Steckeraufnahme 29 und an ihrem anderen Ende in einen Kontaktblock 31 eingesetzt sind, der nach dem Einbau der Verteilungsbaugruppe in den Kabelanschlussraum ragt. Außerdem besitzt die Verteilungsbaugruppe dritte biegsame isolierte elektrische Leiter 32, die eine Steuerverdrahtung bilden und die an ihrem einen Ende in eine Steuerkontakt-Steckeraufnahme 33 und an ihrem anderen Ende in den Kontaktblock 31 eingesteckt sind.

Die Haupttrennkontakt-Steckeraufnahme 29 und die Steuerkontakt-Steckeraufnahme 33 sind über Durchtrittsöffnungen im Bodenteil der Verteilungsbaugruppe zugänglich.

Die Figur 4 zeigt einen der Verbraucherabzweige 5, der einen Motorabzweig bildet und die Form eines Kleineinschubes der Größe 1/4 hat und der in eine der durch die Fach-Tennwände 20 gebildeten Teilfächer 21 (vgl. Figur 2) des Einschubfaches 2 einschiebbar ist. Dieser Verbraucherabzweig 5 weist aus einer Trennstellung in eine Kontaktstellung verschiebbare Kontakteinheiten in Form eines Hauptstromsteckers 34 und eines Steuerstromsteckers 35 auf. Durch eine der Durchtrittsöffnungen der Verteilungsbaugruppe hindurch ist der Hauptstromstecker 34 in die Haupttrennkontakt-Steckeraufnahme 29 und der Steuerstromsteckers 35 in die Steuerkontakt-Steckeraufnahme 33 einschiebbar.

Der Hauptstromstecker 34 und der Steuerstromstecker 35 sind wie oben bereits beschrieben zum Kontaktieren der elektrischen Leiter der Einspeise-/Abgangs- und Steuerverdrahtung mittels zweier im jeweiligen Geräteträger angeordneter Verfahrmechaniken vertikal verfahrbar, so wie dies in der deutschen Patentanmeldung DE 10 2007 032 548.9 beschrieben ist.

Gemäß den Figuren 4 bis 6 weist eine quer zur Frontplatte 105 verlaufende Seitenwand 36 des Kleineinschubes Befestigungsmittel in Form zweier von Nieten 38 durchgriffener Durchgangslöcher 39 zur Befestigung einer im Weiteren beschriebenen erfindungsgemäßen Steuereinheit 40 auf.

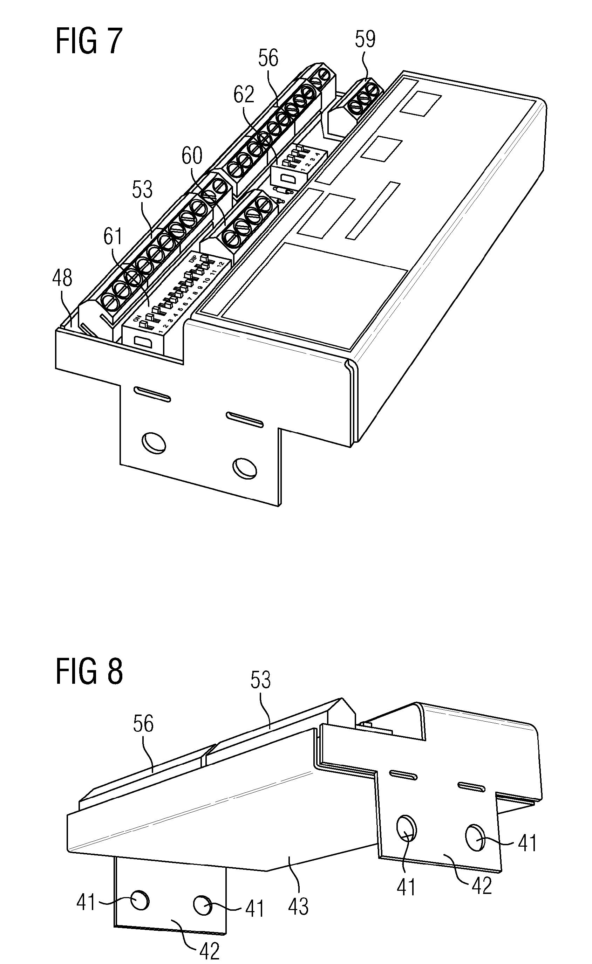

Den Befestigungsmitteln des jeweiligen Verbraucherabzweiges entsprechend weist die Steuereinheit 40 gemäß der Figuren 7 und 8 korrespondierende Befestigungsmittel 41 in Form von vier Durchgangslöchern auf, die paarweise in seitlichen Laschen 42 eines Gehäuses 43 der Steuereinheit 40 ausgebildet sind. Zur Befestigung der Steuereinheit 40 in dem in den Figuren 4 bis 6 gezeigten Kleineinschub sind der Durchgangslöcher von den Nieten 38 durchgriffen.

Weiterhin weist der als Motorabzweig ausgebildete Verbraucherabzweig 5 folgende Hauptstromkreisgeräte auf: einen Leistungsschalter 44, der den Hauptschalter bildet, zwei Schütze 45 und ein Überlastrelais 46. An der Frontplatte 105 ist eine erste Steuerstelle Bedien- und Anzeigefeld 15 in Form einer Folientastatur angeordnet, die mit mehreren Tasten und LED's versehen ist. Die Folientastatur dient damit zur Bedienung und Anzeige direkt am Verbraucherabzweig 5.

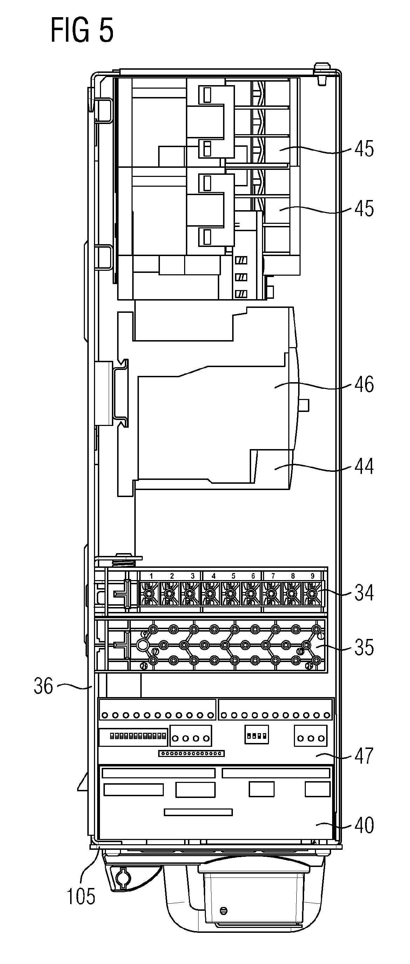

Gemäß der Figur 5 ist die neue Steuereinheit 40 in dem Einschubmodul hinter der Frontplatte 105 noch vor den Kontakteinheiten in Form der Haupt- und Steuerstromstecker 34, 35 angeordnet. Dabei ist eine Anschlussseite 47 der Steuereinheit 40 von der oberen offenen Seite des Einschubmoduls zugänglich.

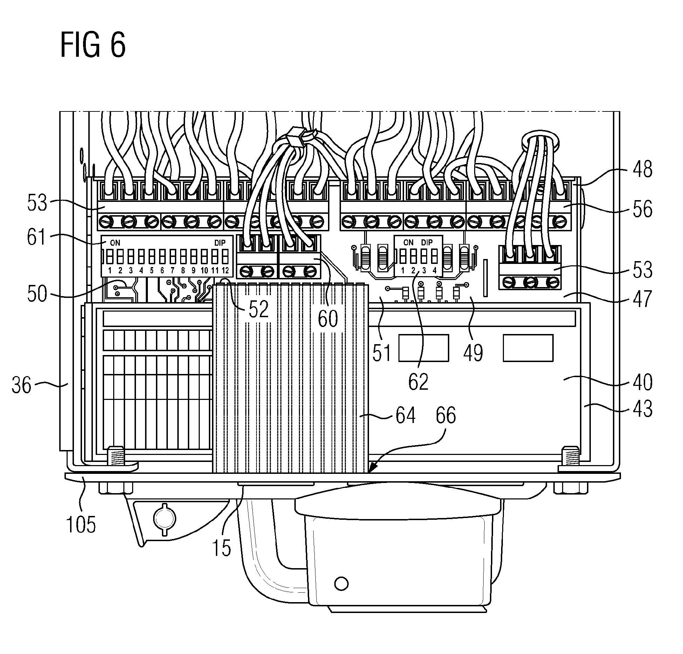

Gemäß den Figuren 6 bis 8 besteht das Gehäuse 43 der Steuereinheit aus zwei Blechen, die zu einer etwa halbseitig überdachten und mit den Laschen 42 versehenen Schale 48 gebogenen sind.

In der Figur 6 ist gezeigt, dass auf einer einzigen Steuerplatine 49 der Steuereinheit ein parametrierbarer Steuerstromkreis 50 ausgebildet ist, und dass die Steuerplatine 49 zu ihrem Schutz in der Schale 48 positioniert und mittels einer transparenten Vergussmasse 51 vergossen ist.

Der Steuerstromkreis 50 dient zur Ansteuerung der Hauptstromkreisgeräte des Verbraucherabzweiges. Eingestellt auf verschiedene Werte von Parametern eines Parametersatzes PS realisiert der Steuerstromkreis entsprechend verschiedene Steuerfunktionen zur Ansteuerung des Verbraucherabzweiges, die nachfolgend noch im Detail beschrieben sind. Dabei werden im Weiteren zur Vereinfachung die Parameter mit P1 bis P12 und die verschiedenen Werte dieser Parameter mit p1', p1" bis p12', p12" bezeichnet.

Der Steuerstromkreis 50 der Steuereinheit 40 kann eine Relais-Schaltung oder eine Logikbaustein-Schaltung oder eine Mikroprozessor-Schaltung oder eine Kombination aus zumindest zwei der genannten Schaltungen sein. Der in der Figur 6 gezeigte Steuerstromkreis 50 ist eine Kombination aus einer Relais-Schaltung und einer Logikbaustein-Schaltung.

Gemäß den Figuren 6, 7 und 9 sind auf der einzigen Steuerplatine 49 direkt drei Anschlüsse (Schnittstellen) 52, 53 und 56 für Steuerstellen angeordnet.

Ein mit dem Bezugszeichen 52 versehenen FERN-HAND-Anschluss dient zum Anschluss der FERN-HAND-Steuerstelle 15, die zu einer FERN-HAND-Steuerung am Verbraucherabzweig der Stromverteilereinheit dient. Ein mit dem Bezugszeichen 53 versehenen FERN-AUTO-Anschluss dient zum Anschluss einer FERN-AUTO-Steuerstelle 54, die auch als Automatiksteuerung bezeichnet wird und zu einer FERN-AUTO-Steuerung beispielsweise aus einer Leitwarte 55 dient. Ein mit dem Bezugszeichen 56 versehenen VORORT-Anschluss dient zum Anschluss einer VORORT-Steuerstelle 57, die zu einer VORORT-Steuerung direkt am zu steuernden Verbraucher 58 dient.

Weiterhin sind auf der Steuerplatine 49 ein vierter Anschluss 59 für die zu steuernden Hauptstromkreisgeräte und ein fünfter Anschluss 60 für Fehlermeldestellen und für eine Versorgungsspannung angeordnet.

Außerdem ist direkt auf der Steuerplatine 49 eine Parametriereinrichtung - also Mitteln zum Einstellen der verschiedenen Werte der Parameter des Parametersatzes - in Form eines 12-fach DIP-Schalters 61 und eine Spannungsumschalteinrichtung in Form eines 4-fach DIP-Schalters 62 angeordnet und zum Schutz vor unbeabsichtigtem Lösen von der Steuerplatine 49 durch die Vergussmasse 51 teilweise mit der Steuerplatine 49 vergossen.

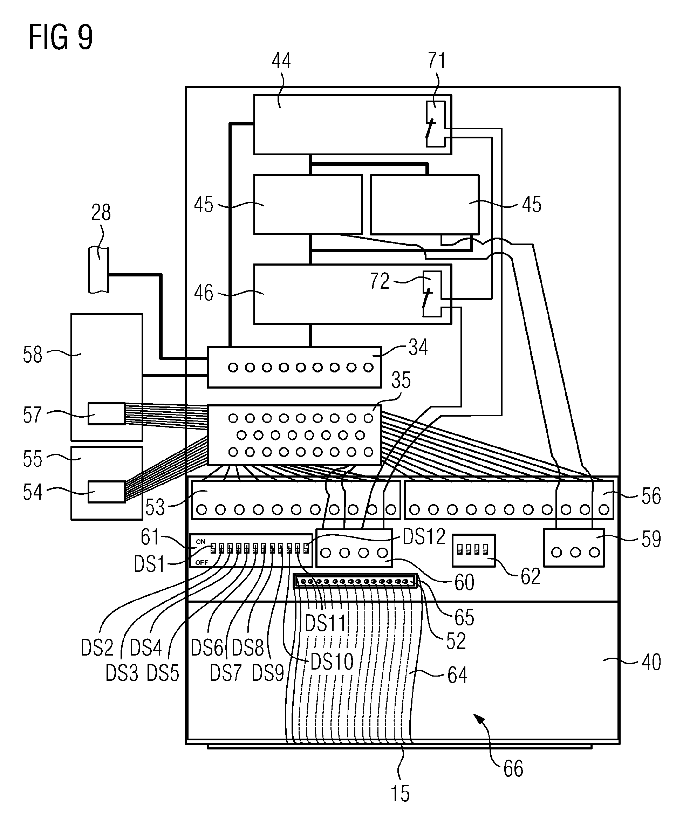

Figur 9 zeigt die Anschlüsse 53 und 56 sowie 59 und 60, die als Klemmenblöcke, insbesondere Printklemmblöcke ausgebildet sind, und ihre Verdrahtung mit Einzelkontakten der Kontakteinheiten und mit den Hauptstromkreisgeräten. Gezeigt ist auch die Verbindung der als Folientastatur ausgebildeten FERN-Hand-Steuerstelle 15 mit dem Anschluss 52. Diese Verbindung erfolgt mittels eines Flachbandkabels 64, das Teil der Folientastatur ist und das einen mit dem Anschluss 52 korrespondierenden Anschluss 65 aufweist, so dass beide Anschlüsse 52 und 65 zur ihrer Verbindung nur ineinander gesteckt werden müssen. Das Flachbandkabel 64 durchgreift dabei eine Ausnehmung 66 in der Frontplatte 105.

Weiterhin zeigt die Figur 9 den 12-fach DIP-Schalter 61, der aus zwölf Einzelschaltern DS1 bis DS12 besteh. Die Einzelschalter sind dabei jeweils zwischen einer OFF-Stellung und einer ON-Stellung umschaltbar. Jeder der Einzelschalter dient zum Einstellen jeweils eines der Werte p1' oder p1" bis p12' oder p12" eines der Parameter P1 bis P12 des Parametersatzes PS (PS = {P1 (p1' oder p1"), P2 (p2' oder p2") ... P12 (p12' oder p12")}.

Nachfolgend ist beschrieben, auf welche Werte die Parameter bei den Stellungen OFF bzw. ON der Einzelschalter DS1 bis DS12 eingestellt sind.

In der Stellung OFF des Einzelschalters DS1 ist ein erster P1 der Parameter auf einen ersten p1' seiner Werte eingestellt. Mit dieser Einstellung ist eine erste Betriebsart der Steuerstellen 15, 54, 57 realisiert, bei der eine Ausschaltfunktion einer ersten, oft mit der Bezeichnung "STOP" gekennzeichneten Taste 67 (vgl. Figur 4) der FERN-HAND-Steuerstelle 15 bei jeder der Steuerungen (FERN-HAND-Steuerung, FERN-AUTO-Steuerung und VORORT-Steuerung) aktiv ist.

In der Stellung ON des Einzelschalters DS1 ist der erste P1 der Parameter auf einen zweiten p1" seiner Werte eingestellt. Mit dieser Einstellung ist eine zweite Betriebsart der Steuerstellen 15, 54, 57 realisiert, bei der die Ausschaltfunktion der ersten Taste 67 der FERN-HAND-Steuerstelle 15 nur bei FERN-HAND-Steuerung aktiv ist.

In der Stellung OFF des Einzelschalters DS2 ist ein zweiter P2 der Parameter auf einen ersten p2' seiner Werte eingestellt. Mit dieser Einstellung ist eine dritte Betriebsart der Steuerstellen 15, 54, 57 realisiert, bei der eine Ausschaltfunktion der FERN-AUTO-Steuerstelle 54 bei jeder der Steuerungen (FERN-HAND-Steuerung, FERN-AUTO-Steuerung und VORORT-Steuerung aktiv ist.

In der Stellung ON des Einzelschalters DS2 ist der zweite P2 der Parameter auf einen zweiten p2" seiner Werte eingestellt. Mit dieser Einstellung ist eine vierte Betriebsart der Steuerstellen 15, 54, 57 realisiert, bei der die Ausschaltfunktion der FERN-AUTO-Steuerstelle 54 nur bei FERN-AUTO-Steuerung aktiv ist.

In der Stellung OFF des Einzelschalters DS3 ist ein dritter P3 der Parameter auf einen ersten p3' seiner Werte eingestellt. Mit dieser Einstellung ist eine in der Praxis als Direktstarter bezeichnete erste Betriebsart der Hauptstromkreisgeräte 44, 45, 46 realisiert, bei der einer der beiden Schütze 45 nicht ansteuerbar ist.

In der Stellung ON des Einzelschalters DS3 ist der dritte P3 der Parameter auf einen zweiten p3" seiner Werte eingestellt. Mit dieser Einstellung ist eine in der Praxis als Wendestarter bezeichnete Betriebsart der Hauptstromkreisgeräte 44, 45, 46 realisiert, bei der beide Schütze 45 ansteuerbar sind.

In der Stellung OFF des Einzelschalters DS4 ist ein vierter P4 der Parameter auf einen ersten p4' seiner Werte eingestellt. Mit dieser Einstellung ist eine fünfte Betriebsart der Steuerstellen 15, 54, 57 realisiert, bei der eine Umschaltung zwischen der FERN-HAND-Steuerung und der FERN-AUTO-Steuerung über eine Umschaltfunktion einer zweiten 68, oft mit der Bezeichnung "AUTO" gekennzeichneten Taste der FERN-HAND-Steuerstelle aktiv ist, so dass bei Betätigung der zweiten Taste 68 ein Wechsel in die jeweils nicht aktive der beiden Steuerungen erfolgt.

In der Stellung ON des Einzelschalters DS4 ist der vierte P4 der Parameter auf einen zweiten p4" seiner Werte eingestellt. Mit dieser Einstellung ist eine sechste Betriebsart der Steuerstellen 15, 54, 57 realisiert, bei der die Umschaltung zwischen der FERN-HAND-Steuerung und der FERN-AUTO-Steuerung über eine Umschaltfunktion der FERN-AUTO-Steuerstelle 54 erfolgt.

In der Stellung OFF des Einzelschalters DS5 ist ein fünfter P5 der Parameter auf einen ersten p5' seiner Werte eingestellt. Mit dieser Einstellung ist eine siebente Betriebsart der Steuerstellen 15, 54, 57 realisiert, bei der eine Umschaltung zwischen VORORT-Steuerung und FERN-HAND-Steuerung über eine Umschaltfunktion der VORORT-Steuerstelle 57 erfolgt, wobei auch bei einer Steuerspannungswiederkehr die FERN-HAND-Steuerung aktiviert wird, wenn die VORORT-Steuerung nicht aktiv ist. Dabei ist der Einzelschalters DS5 ohne Funktion, wenn der Einzelschalter DS4 auf ON geschaltet ist.

In der Stellung ON des Einzelschalters DS5 ist der fünfte P5 der Parameter auf einen zweiten p5" seiner Werte eingestellt. Mit dieser Einstellung ist eine achte Betriebsart der Steuerstellen 15, 54, 57 realisiert, bei der eine Umschaltung zwischen VORORT-Steuerung und FERN-AUTO-Steuerung über eine Umschaltfunktion der VORORT-Steuerstelle 55 erfolgt, wobei auch bei einer Steuerspannungswiederkehr die FERN-AUTO-Steuerung aktiviert wird, wenn die VORORT-Steuerung nicht aktiv ist. Dabei ist der Einzelschalters DS5 ohne Funktion, wenn der Einzelschalter DS4 auf ON geschaltet ist.

In der Stellung OFF des Einzelschalters DS6 ist ein sechster P6 der Parameter auf einen ersten p6' seiner Werte eingestellt. Mit dieser Einstellung ist eine neunte Betriebsart der Steuerstellen 15, 54, 57 realisiert, bei der ein Impulsbetrieb mit Zustandsspeicher für die VORORT-Steuerung und für die FERN-HAND-Steuerung aktiv ist. Dies bedeutet, dass die Ansteuerung der beiden Schütze 45 speichernd über entsprechende Ansteuerfunktionen der VORORT-Steuerstelle oder entsprechende Tasten 69, 70 der FERN-HAND-Steuerstelle und die Abschaltung über die gültigen Ausschaltfunktionen erfolgt.

In der Stellung ON des Einzelschalters DS6 ist der sechste P6 der Parameter auf einen zweiten p6'' seiner Werte eingestellt. Mit dieser Einstellung ist eine zehnte Betriebsart der Steuerstellen 15, 54, 57 realisiert, bei der ein Tippbetrieb für die VORORT-Steuerung und die FERN-HAND-Steuerung aktiviert ist. Dies bedeutet, dass die Ansteuerung der beiden Schütze 45 über die entsprechenden Ansteuerfunktionen der VORORT-Steuerstelle (über Tasten der VORORT-Steuerstelle, die hier nicht dargestellt sind) oder die entsprechenden Tasten 69, 70 der FERN-HAND-Steuerstelle nur so lange erfolgt, wie diese Tasten 69, 70 betätigt werden und keine der Ausschaltfunktionen aktiv ist.

In der Stellung OFF des Einzelschalters DS7 ist ein siebenter P7 der Parameter auf einen ersten p7' seiner Werte eingestellt. Mit dieser Einstellung ist eine elfte Betriebsart der Steuerstellen 15, 54, 57 realisiert, bei der ein Impulsbetrieb mit Zustandsspeicher für die FERN-AUTO-Steuerung aktiviert ist. Dies bedeutet, dass die Ansteuerung der beiden Schütze 45 speichernd über entsprechende Ansteuerfunktionen der FERN-AUTO-Steuerstelle 54 und die Abschaltung über die gültigen Ausschaltfunktionen erfolgt.

In der Stellung ON des Einzelschalters DS7 ist der Siebente P7 der Parameter auf einen zweiten p7" seiner Werte eingestellt. Mit dieser Einstellung ist eine zwölfte Betriebsart der Steuerstellen 15, 54, 57 realisiert, bei der ein Tippbetrieb für die FERN-AUTO-Steuerung aktiviert ist. Dies bedeutet, dass die Ansteuerung der beiden Schütze 45 über die FERN-AUTO-Steuerstelle 54 nur so lange erfolgt, wie das Signal der entsprechenden Ansteuerfunktionen ansteht und keine der Ausschaltfunktionen aktiv ist.

In der Stellung OFF des Einzelschalters DS8 ist ein achter P8 der Parameter auf einen ersten p8' seiner Werte eingestellt. Mit dieser Einstellung ist eine dreizehnte Betriebsart der Steuerstellen 15, 54, 57 realisiert, bei der eine Störmeldung von Überwachungsgeräten 71, 72 (hier Hilfsschalter des Leistungsschalters 44 und des Überlastauslösers 46) des Verbraucherabzweiges auf der Steuerplatine gespeichert wird.

In der Stellung ON des Einzelschalters DS8 ist der achte P8 der Parameter auf einen zweiten p8" seiner Werte eingestellt. Mit dieser Einstellung ist eine vierzehnte Betriebsart der Steuerstellen 15, 54, 57 realisiert, bei der eine Störmeldung von den Überwachungsgeräten 71, 72 des Verbraucherabzweiges auf der Steuerplatine nicht gespeichert wird, sondern nur bei anstehender Störung aktiv ist.

In der Stellung OFF des Einzelschalters DS9 ist ein neunter P9 der Parameter auf einen ersten p9' seiner Werte eingestellt. Mit dieser Einstellung ist eine fünfzehnte Betriebsart der Steuerstellen 15, 54, 57 realisiert, bei der eine Betätigung der ersten Taste 67 der FERN-HAND-Steuerstelle 15 nicht zur Rücksetzung der gespeicherten Störmeldung führt.

In der Stellung ON des Einzelschalters DS9 ist der neunten P9 der Parameter auf einen zweiten p9'' seiner Werte eingestellt. Mit dieser Einstellung ist eine sechzehnte Betriebsart der Steuerstellen 15, 54, 57 realisiert, bei der eine Betätigung der ersten Taste 67 der FERN-HAND-Steuerstelle 15 zur Rücksetzung der gespeicherten Störmeldung führt.

In der Stellung OFF des Einzelschalters DS10 ist ein zehnter P10 der Parameter auf einen ersten p10' seiner Werte eingestellt. Mit dieser Einstellung ist eine siebzehnte Betriebsart der Steuerstellen 15, 54, 57 realisiert, bei der die Ausschaltfunktion der FERN-AUTO-Steuerstelle 54 nicht zur Rücksetzung der gespeicherten Störmeldung führt.

In der Stellung ON des Einzelschalters DS10 ist der zehnten P10 der Parameter auf einen zweiten p10" seiner Werte eingestellt. Mit dieser Einstellung ist eine achtzehnte Betriebsart der Steuerstellen 15, 54, 57 realisiert, bei der die Ausschaltfunktion der FERN-AUTO-Steuerstelle 54 zur Rücksetzung der gespeicherten Störmeldung führt.

In der Stellung OFF des Einzelschalters DS11 ist ein elfter P11 der Parameter auf einen ersten p11' seiner Werte eingestellt. Mit dieser Einstellung ist eine neunzehnte Betriebsart der Steuerstellen 15, 54, 57 realisiert, bei der die Ausschaltfunktion der VORORT-Steuerstelle 57 nicht zur Rücksetzung der gespeicherten Störmeldung führt.

In der Stellung ON des Einzelschalters DS11 ist der elfte P11 der Parameter auf einen zweiten p11" seiner Werte eingestellt. Mit dieser Einstellung ist eine zwanzigste Betriebsart der Steuerstellen 15, 54, 57 realisiert, bei der die Ausschaltfunktion der VORORT-Steuerstelle 57 zur Rücksetzung der gespeicherten Störmeldung führt.

In der Stellung OFF des Einzelschalters DS12 ist ein zwölfter P12 der Parameter auf einen ersten p12' seiner Werte eingestellt. Mit dieser Einstellung ist eine einundzwanzigste Betriebsart der Steuerstellen 15, 54, 57 realisiert, bei der bei Eingang einer Störmeldung nur eine Anzeige der Störung aber keine Abschaltung der Schütze 45 erfolgt.

In der Stellung ON des Einzelschalters DS12 ist der zwölfte P12 der Parameter auf einen zweiten p12" seiner Werte eingestellt. Mit dieser Einstellung ist eine zweiundzwanzigste Betriebsart der Steuerstellen 15, 54, 57 realisiert, bei der bei Eingang einer Störmeldung sowohl eine Anzeige der Störung als auch eine Abschaltung der Schütze 45 erfolgt.

Die neue Steuereinheit 40 ist damit für verschiedene Steueraufgaben parametrierbar, die durch verschiedene Werte p1' oder p1'' bis p12' oder p12'' der Parameter P1 bis P12 des Parametersatzes PS - also durch verschiedene Kombinationen der einstellbaren Betriebsarten der Hauptstromkreisgeräte und der Steuerstellen - charakterisiert sind.

Durch die Einzelschalter DS1 bis DS12 des DIP-Schalters 61 kann eine vorgegebene Steuerfunktion des Verbraucherabzweiges 5 gewählt werden, indem die Parameter P1 bis P12 des Parametersatzes PS auf Werte p1' oder p1'' bis p12' oder p12'' eingestellt werden, die dieser Funktion entsprechen.

Mit der neuen Steuereinheit wird die Funktionalität des Steuerstromkreises als universelle Steuerplatine realisiert, auf der die für eine vorgegebene Steueraufgabe des Verbraucherabzweiges benötige Steuerfunktion nach Bedarf aktiviert werden kann.

Die Bedienung und Anzeige am Verbraucherabzweig selbst erfolgt auf sehr einfache Weise mittels der FERN-HAND-Steuerstelle 15 in Form der Folientastatur, die durch das Flachbandkabel 64 direkt mit der Steuerplatine verbunden werden kann.

Nicht mehr benötigte Hilfsschütze, -schalter, Relais, Tasten und Leuchtmelder bringen erhebliche Einsparungen bei Material-, Montage- und Verdrahtungsaufwand.

Mit der kompakten Steuereinheit 40 und der flachen Folientastatur wird der Platzbedarf für den Steuerstromkreis in einem Verbraucherabzweig erheblich verringert wodurch eine kompaktere Bauweise des Verbraucherabzweiges selbst möglich wird.

Mit der Steuereinheit 40 wird ein Standard für den Steuerstromkreis von Verbraucherabzweigen definiert. Der Aufwand für Projektierung und Engineering von Steuerstromkreisen für Verbraucherabzweige kann dadurch deutlich gesenkt werden.

## Patentansprüche

1. Steuereinheit (40)
- mit einem parametrierbaren Steuerstromkreis (50) zur Ansteuerung von Hauptstromkreisgeräten (44, 45, 46) eines Verbraucherabzweiges (5; 6; 7; 8; 9) mittels Steuerstellen (15, 54, 57), wobei der Steuerstromkreis (50) eingestellt auf verschiedene Werte (p1' oder p1'' bis p12' oder p12'') von Parametern (P1 bis P12) eines Parametersatzes (PS) verschiedene Steuerfunktionen für den Verbraucherabzweig (5; 6; 7; 8; 9) realisiert, und
- mit Mitteln zum Einstellen der verschiedenen Werte der Parameter des Parametersatzes,
- wobei der Steuerstromkreis (50) auf zumindest einer Steuerplatine (49) ausgebildet ist,
**dadurch gekennzeichnet, dass**
als Mittel zum Einstellen der verschiedenen Werte der Parameter zumindest eine direkt auf der Steuerplatine (49) angeordnete Parametriereinrichtung, insbesondere in Form eines DIP-Schalters (61) vorgesehen ist.

2. Steuereinheit (40) nach Anspruch 1 ,
**dadurch gekennzeichnet, dass**
der Steuerstromkreis (50) eine Relais-Schaltung oder eine Logikbaustein-Schaltung oder eine Mikroprozessor-Schaltung oder eine Kombination aus zumindest zwei der genannten Schaltungen, insbesondere eine Kombination aus einer Relais-Schaltung und einer Logikbaustein-Schaltung ist.

3. Steuereinheit (40) nach einem der Ansprüche 1 oder 2,
**dadurch gekennzeichnet, dass**
zumindest ein erster (P3) der Parameter eine Betriebsart der Hauptstromkreisgeräte (44, 45, 46) ist.

4. Steuereinheit (40) nach einem der Ansprüche 1 bis 3
**dadurch gekennzeichnet, dass** zumindest ein zweiter (P1, P2 und P4 bis P12) der Parameter eine Betriebsart der Steuerstellen (15, 54, 57) ist.

5. Steuereinheit (40) nach einem der Ansprüche 1 bis 4
**dadurch gekennzeichnet, dass**
auf der Steuerplatine (49) für zumindest drei Steuerstellen (15, 54, 57) jeweils ein Anschluss (52, 53, 56) ausgebildet ist.

6. Steuereinheit (40) nach einem der Ansprüche 1 bis 5,
**dadurch gekennzeichnet, dass**
dass ein erster (53) und ein zweiter (56) der Anschlüsse jeweils als Klemmenblock ausgebildet sind und dass
ein dritter (52) der Anschlüsse ein Flachbandkabel-Anschluss ist, der über ein Flachbandkabel (64) mit einer (15) der Steuerstellen, die als Folientastatur ausgebildet ist, verbunden ist.

7. Steuereinheit (40) nach einem der Ansprüche 1 bis 6,
**dadurch gekennzeichnet, dass**
die Steuerplatine (49) in einem aus Blech gebogenen Gehäuse (43) positioniert und vergossen ist, das Befestigungsmittel (41) zum Befestigen in einem der Verbraucherabzweige (5; 6; 7; 8; 9), insbesondere in einem Motorabzweig, einer Niederspannungs-Schaltanlage aufweist.

8. Verbraucherabzweig (5; 6; 7; 8; 9), insbesondere Motorabzweig einer Niederspannungs-Schaltanlage,
**dadurch gekennzeichnet, dass**
er eine Steuereinheit (40) nach einem der Ansprüche 1 bis 7 aufweist.

9. Verbraucherabzweig (5; 6; 7; 8; 9) nach Anspruch 8,
**dadurch gekennzeichnet, dass**
er als ein Einschubmodul oder als ein Steckeinsatzmodul oder als ein Festeinbaumodul ausgebildet ist.

10. Stromverteilereinheit (1), insbesondere Niederspannungs-Schaltanlage,
**dadurch gekennzeichnet, dass**
sie zumindest einen Verbraucherabzweig (5; 6; 7; 8; 9) nach einem der Ansprüche 8 oder 9 aufweist.
